# EUROPÄISCHE PATENTSCHRIFT

(11) **EP 4 334 989 B1**
(45) Veröffentlichungstag und Bekanntmachung des Hinweises auf die Patenterteilung: **02.07.2025**
(21) Anmeldenummer: 22728381.9
(22) Anmeldetag: 06.05.2022
(51) Int. Cl.: H01M 8/04111, H01M 8/249

(54) **LUFTVERSORGUNGSVORRICHTUNG, BRENNSTOFFZELLENSYSTEM UND FAHRZEUG**
AIR SUPPLY DEVICE, FUEL CELL SYSTEM AND VEHICLE
DISPOSITIF D'ALIMENTATION EN AIR, SYSTÈME DE PILE À COMBUSTIBLE ET VÉHICULE

(30) Priorität: 07.05.2021 DE 102021204650
(43) Veröffentlichungstag der Anmeldung: 13.03.2024
(73) Patentinhaber: cellcentric GmbH & Co. KG, 73230 Kirchheim/Teck-Nabern (DE)
(72) Erfinder: PROCTER, Michael, Burnaby, British Columbia V3N 0G2 (CA)
(74) Vertreter: Platzöder Patentanwaltsgesellschaft mbH
(86) Internationale Anmeldenummer: PCT/EP2022/062291
(87) Internationale Veröffentlichungsnummer: WO 2022/234090

(56) Entgegenhaltungen:
- EP-B1- 2 238 639
- WO-A2-02/086997
- DE-A1- 102021 000 329

## Beschreibung

Die Erfindung betrifft eine Luftversorgungsvorrichtung für Brennstoffzellensysteme mit einer zweistufigen Verdichtung. Außerdem betrifft die Erfindung ein Brennstoffzellensystem mit einer derartigen Luftversorgungsvorrichtung sowie ein Fahrzeug mit einem solchen Brennstoffzellensystem.

Der Einsatz von Brennstoffzellensystemen zur Erzeugung von elektrischer Leistung beispielsweise für stationäre Anwendungen oder insbesondere auch als elektrische Antriebsleistung für Fahrzeuge ist soweit aus dem Stand der Technik bekannt. Häufig werden dabei PEM-Brennstoffzellen eingesetzt, welche kathodenseitig mit Luft als Sauerstofflieferant versorgt werden. Häufig kommen dabei einstufige Strömungsverdichter für die Luftversorgung zum Einsatz. Besonders häufig ist es so, dass diese Strömungsverdichter mit einer Abluftturbine und einer elektrischen Maschine verbunden sind und einen sogenannten elektrischen Turbolader oder motorunterstützten Turbolader ausbilden. Die in der Abluft der jeweiligen Brennstoffzelle enthaltene Energie kann so zumindest teilweise zurückgewonnen und für die Luftversorgung eingesetzt werden.

Problematisch ist es immer, dass derartige Aufbauten mit ihrer Arbeitskennlinie sehr dicht an der Pumpgrenze arbeiten. Um im Teillastbetrieb die zuverlässige Versorgung der Brennstoffzelle zu gewährleisten, ohne die Pumpgrenze zu überschreiten, ist deshalb typischerweise ein sogenanntes Umblasventil, welches auch als Waste-Gate-Ventil bezeichnet wird, vorhanden.

In der Praxis führt dies einerseits zu einer Einschränkung bezüglich der freien Wahl der Arbeitspunkte einerseits und für den Fall, dass bereits verdichtete Zuluft über das Umblasventil strömt, zu einem Leistungsverlust andererseits, da in der Abluftturbine nur ein Teil der beim Verdichten zugefügten Energie wieder zurückgewonnen werden kann.

Um dieser Problematik entgegenzutreten, ist aus der WO 02/086997 A2 eine Brennstoffzellen-Luftversorgung bekannt, welche als zweistufiges System ausgebildet ist. Damit kann unabhängig von der Pumpgrenze eine hohe Variabilität bei den Volumenströmen und Drücken realisiert werden. Der Aufbau ist dabei so gestaltet, dass die erste Stufe durch einen elektrisch angetriebenen Strömungsverdichter und die zweite Verdichtungsstufe durch einen Turboverdichter gebildet wird. Dieser ist über die Welle direkt mit der Abluftturbine gekoppelt und damit als Freiläufer realisiert. Die Abluftturbine weist dabei ein variables Turbinenleitgitter auf. Ein Umblasventil ist bei dem dort beschriebenen Aufbau zwar weiterhin dennoch vorgesehen, wäre hier aber prinzipiell entbehrlich. Des Weiteren offenbart auch DE 10 2021 000329 eine Luftversorgungsvorrichtung für Brennstoffzellensysteme mit einer zweistufigen Verdichtung, zur Versorgung elektrisch parallel verschalteter Brennstoffzellenstapel.

Nun ist es so, dass die Brennstoffzellensysteme zunehmend zur Bereitstellung von relativer großer Leistung eingesetzt werden, beispielsweise zum Antreiben von Nutzfahrzeugen wie Omnibussen, Lastkraftwagen oder dergleichen. Um hier eine einfache und gegebenenfalls auch auf verschiedene Größen der Nutzfahrzeuge skalierbare Anpassung der Leistung zu erreichen, werden mehrere Brennstoffzellenstapel innerhalb des Brennstoffzellensystems elektrisch kombiniert. Ein typischer Aufbau sieht beispielsweise zwei elektrisch parallelgeschaltete Brennstoffzellenstapel in einem solchen Aufbau vor. Da beide Brennstoffzellenstapel sowohl hinsichtlich der Kraftstoffversorgung als auch hinsichtlich der Luftversorgung unabhängig voneinander gesteuert werden sollen, sind bei den aus dem allgemeinen Stand der Technik bekannten Aufbauten typischerweise zwei Luftversorgungssysteme parallel zueinander vorgesehen. Meist sind dies zwei getrennte elektrische Turbolader im eingangs beschriebenen Sinn, welche dann zwei Umblasventile, zwei Umrichter, zwei Elektromotoren und dergleichen benötigen. Die Aufgabe der vorliegenden Erfindung besteht nun darin, diesen aus dem Stand der Technik prinzipiell bekannten Aufbau entsprechend zu vereinfachen und bezüglich der zu erzielenden Variabilität bei der Luftversorgung der Brennstoffzellensysteme zu verbessern.

Erfindungsgemäß wird diese Aufgabe durch eine Luftversorgungsvorrichtung für Brennstoffzellensysteme mit den Merkmalen im Anspruch 1, und hier insbesondere im kennzeichnenden Teil des Anspruchs 1 gelöst. Außerdem löst ein Brennstoffzellensystem mit einer solchen Luftversorgungsvorrichtung die Aufgabe. Auch ein Fahrzeug mit einem derartigen Brennstoffzellensystem kann die Aufgabe lösen. Vorteilhafte Ausgestaltungen und Weiterbildungen der Luftversorgungsvorrichtung und des Fahrzeugs ergeben sich außerdem aus den abhängigen Unteransprüchen.

Die erfindungsgemäße Luftversorgungsvorrichtung sieht zur Versorgung von elektrisch parallel betriebenen Brennstoffzellenstapeln für jeden der Brennstoffzellenstapel einen Turboverdichter vor, welcher mit einer Abluftturbine für den jeweiligen Brennstoffzellenstapel mechanisch gekoppelt ist. In Strömungsrichtung der verdichteten Luft vor dem Turboverdichter ist dabei mindestens ein elektrisch angetriebener Strömungsverdichter vorgesehen, welcher jeweils wenigstens zwei der Turboverdichter parallel mit Luft versorgt.

Die Turboverdichter, welche jeweils als Freiläufer in direkter mechanischer Verbindung mit einer Abluftturbine ausgestaltet sind, bilden hier also die zweite Verdichterstufe einer zweistufigen Luftversorgungsvorrichtung. Sie sind jeweils einem der Brennstoffzellenstapel zugeordnet, welche in dem Gesamtsystem parallel betrieben werden und typischerweise parallel elektrisch verschaltet sind. Eine elektrische Reihenverschaltung wäre prinzipiell jedoch ebenfalls denkbar.

Die erste Stufe der Verdichtung in der Luftversorgungsvorrichtung wird nun für jeweils wenigstens zwei der Turboverdichter durch einen elektrisch angetriebenen Strömungsverdichter ausgebildet. Bei dem typischen Aufbau mit zwei Brennstoffzellenstapeln versorgt also ein elektrisch angetriebener Strömungsverdichter als erste Verdichtungsstufe zwei Turboverdichter als zweite Stufe der Verdichtung, welche ihrerseits jeweils einen ihnen zugeordneten Brennstoffzellenstapel versorgen. Die kathodenseitige Abluft dieses Brennstoffzellenstapels gelangt dann über die mit dem jeweiligen Turboverdichter verbundene Abluftturbine in die Umgebung, sodass Restenergie in der Abluft über die Abluftturbine die zweite Verdichtungsstufe für den jeweiligen Brennstoffzellenstapel antreibt. Die beiden Turboverdichter haben dann einen gemeinsamen Strömungsverdichter, welcher sie niederdruckseitig mit Luft versorgt und damit die erste Stufe der Verdichtung für beide Turboverdichter gemeinsam ausgebildet.

Dieser Aufbau ermöglicht es nun, die Vorteile der zweistufigen Verdichtung zu nutzen, um so eine hohe Freiheit bei der Wahl der Betriebspunkte zu haben, ohne Gefahr zu laufen, die Pumpgrenze zu überschreiten. Der Aufbau ist außerdem kompakt und effizient, da er im Bereich der beiden Turboverdichter als zweite Stufe auf die einfachen und effizienten Freiläufer ohne elektrische Maschine setzt. Als erste Stufe der Verdichtung setzt der Aufbau einen ebenfalls einfachen Strömungsverdichter ein, welcher beispielsweise über einen größeren Umfang seines Verdichterrads verfügen kann als die beiden Turboverdichter, um so bei moderaten Drehzahlen und einem entsprechend einfachen und kostengünstigen Antriebsmotor die benötigte Luftmenge zur Verfügung zu stellen.

Der Aufbau benötigt insgesamt für beide parallelen Brennstoffzellenstapel dann lediglich einen einzigen Elektromotor mit dem entsprechenden Umrichter und kann durch die zweistufige Verdichtung insbesondere auf die Umblasventile verzichten. Dies führt zu einem erheblichen Kosten- und Bauraumvorteil bezüglich der eingesparten Komponenten, insbesondere bezüglich der eingesparten elektrischen Komponenten und ihrer Ansteuerung.

Gemäß einer außerordentlich günstigen Weiterbildung der erfindungsgemäßen Luftversorgungsvorrichtung ist es so, dass wenigstens eine der Abluftturbinen ein variables Turbinenleitgitter aufweist. Vorzugsweise können es gemäß einer vorteilhaften Weiterbildung auch alle Abluftturbinen sein. Über ein solches variables Turbinenleitgitter im Bereich der Abluftturbinen kann die über die Abluft aus der Brennstoffzelle in der jeweiligen Abluftturbine bereitgestellte Energie entsprechend variiert werden, um so eine hohe Variabilität beim Antrieb des Turboverdichters in der zweiten Verdichtungsstufe zu realisieren. Hierdurch lassen sich beide parallel betriebenen Brennstoffzellenstapel weitgehend unabhängig voneinander bezüglich der Menge an Luft, mit welcher sie versorgt werden, ansteuern. Dies ermöglicht einen sehr vorteilhaften und weitgehend von dem anderen der Brennstoffzellenstapel unabhängigen Betrieb des jeweiligen Brennstoffzellenstapels bezüglich seiner Luftversorgung. Zusammen mit einem einfachen anzusteuernden Dosierventil für den Wasserstoff auf der Anodenseite lässt sich so jeder der Brennstoffzellenstapel unabhängig von dem jeweils anderen Brennstoffzellenstapel betreiben.

Ein weiterer ganz entscheidender Aspekt besteht nun darin, dass die wenigstens eine variable Turbinengeometrie und ein elektrischer Antriebsmotor des Strömungsverdichters über eine gemeinsame Steuerung angesteuert sind, um so auch den Aufwand bezüglich der Steuerung zu reduzieren. Die Steuerung kann insbesondere auch die Dosierung von Wasserstoff auf die Anodenseite des jeweiligen Brennstoffzellenstapels ansteuern, um dadurch die bereitgestellte elektrische Leistung in den wenigstens zwei parallel betriebenen Brennstoffzellenstapeln individuell ansteuern zu können.

Wie bereits erwähnt kann es dabei gemäß einer besonders günstigen Ausgestaltung vorgesehen sein, dass der Aufbau über genau einen Strömungsverdichter und genau zwei Turboverdichter verfügt und zur Luftversorgung von zwei parallel betriebenen Brennstoffzellenstapeln vorgesehen ist.

Eine weitere vorteilhafte Ausgestaltung sieht es ferner vor, dass in Strömungsrichtung nach dem Turboverdichter jeweils ein Ladeluftkühler angeordnet ist, um so die nach dem Verdichten in dem zweistufigen Verdichtungsprozess heiße und typischerweise trockene Ladeluft entsprechend abzukühlen sowie gegebenenfalls über einen Befeuchter im Anschluss an den Ladeluftkühler oder in Kombination mit dem Ladeluftkühler zu befeuchten.

Ein erfindungsgemäßes Brennstoffzellensystem kann nun wenigstens zwei Brennstoffzellenstapel umfassen und eine Luftversorgungsvorrichtung in der beschriebenen Art. Damit lassen sich die bezüglich der Luftversorgung beschriebenen Vorteile und die über die Luftversorgung eröffneten Möglichkeiten beim effizienten Betrieb und der individuellen Ansteuerung von wenigstens zwei Brennstoffzellenstapeln innerhalb eines Brennstoffzellensystems ideal nutzen.

Ein erfindungsgemäßes Fahrzeug umfasst dementsprechend ein derartiges Brennstoffzellensystem mit wenigstens zwei, vorzugsweise genau zwei Brennstoffzellenstapeln. Das Fahrzeug kann dabei als Nutzfahrzeug ausgebildet sein, beispielsweise als Lastkraftwagen oder Omnibus.

Weitere vorteilhafte Ausgestaltungen der erfindungsgemäßen Luftversorgungsvorrichtung sowie des erfindungsgemäßen Brennstoffzellensystems und/oder Fahrzeugs ergeben sich auch aus dem Ausführungsbeispiel, welches nachfolgend unter Bezugnahme auf die Figuren näher erläutert ist.

Dabei zeigen:
- Fig. 1: eine Darstellung eines Brennstoffzellensystems mit zwei Brennstoffzellenstapeln und zwei Luftversorgungssystemen gemäß dem Stand der Technik; und
- Fig. 2: ein Aufbau analog zu dem in Fig. 1 mit einer Luftversorgungsvorrichtung in einer möglichen Ausführungsform gemäß der Erfindung.

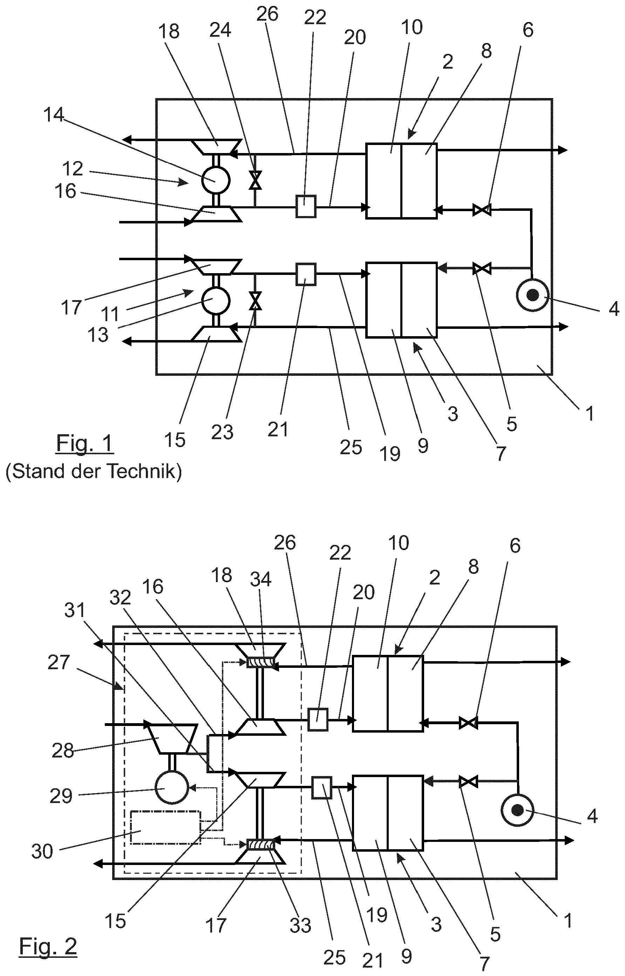

In der Darstellung der Figur 1 ist sehr stark schematisiert ein Fahrzeug 1 angedeutet, beispielsweise ein Nutzfahrzeug. Es soll seine elektrische Antriebsleistung, oder zumindest einen Teil seiner elektrischen Antriebsleistung aus zwei Brennstoffzellenstapeln 2, 3 beziehen. Die Brennstoffzellenstapel 2, 3 werden dafür parallel betrieben und sind insbesondere elektrisch parallel verschaltet. Der Aufbau verfügt über eine gemeinsame Wasserstoffquelle 4, welche beispielsweise als Druckgasspeicher, als Kryospeicher oder dergleichen ausgebildet sein kann. Über die Wasserstoffquelle 4 wird über zwei getrennte Druckregel- und Dosierventile 5, 6 Wasserstoff in Anodenräume 7, 8 der beiden Brennstoffzellenstapel 2, 3 geleitet. Nicht verbrauchter Wasserstoff gelangt in dem hier dargestellten Ausführungsbeispiel zusammen mit Abgasen in die Umgebung.

Dies ist lediglich eine schematische Darstellung. Dem Fachmann ist klar, dass hier weitere Komponenten wie beispielsweise Anodenkreisläufe angeordnet sein können oder Maßnahmen ergriffen werden können, um das Abgas beispielsweise der Abluft zuzuführen und es entsprechend zu verdünnen. Da die Anodenseite für die hier vorliegende Erfindung von untergeordneter Bedeutung ist, wird hierauf jedoch nicht weiter eingegangen.

Zur Luftversorgung der beiden Kathodenräume 9, 10 der beiden Brennstoffzellenstapel 2, 3 sind bei diesem Aufbau gemäß dem Satnd der Technik jeweils elektrische Turbolader 11, 12 vorgesehen. Sie verfügen beide über eine elektrische Antriebsmaschine 13, 14 sowie einen Turboverdichter 15, 16. Zusammen mit diesen beiden Komponenten auf einer gemeinsamen Welle angeordnet ist außerdem jeweils eine Abluftturbine 17, 18 des elektrischen Turboladers. In einer Zuluftleitung 19, 20 zu dem jeweiligen Brennstoffzellenstapel 2, 3 ist außerdem jeweils ein Ladeluftkühler 21, 22 vorgesehen. Die Zuluftleitungen 19, 20 zu den beiden Brennstoffzellenstapeln 2, 3 sind außerdem über sogenannte Umblasventile 23, 24, welche auch als Waste-Gate-Ventile bezeichnet werden, mit den jeweiligen Abluftleitungen 25, 26 der Brennstoffzellenstapel 2, 3 verbunden, um so verdichtete Luft nach dem jeweiligen Turboverdichter 17, 18 bei Bedarf abblasen zu können, wenn der jeweilige Brennstoffzellenstapel 2, 3 im Teillastbetrieb betrieben wird. Dfies ist nötig um ein überschreiten der Pumpgrenze in bestimmten Betriebspunkten sicher zu verhindern. Der Aufbau ermöglicht eine unabhängige Versorgung der beiden Brennstoffzellenstapel 2, 3 mit Luft voneinander, ist jedoch hinsichtlich der benötigten Bauteile und ihrer Ansteuerung relativ komplex.

In der Darstellung der Figur 2 ist nun ein Aufbau mit einer Luftversorgungsvorrichtung 27 gezeigt, welche hier entscheidende Vorteile bietet. Die beiden Brennstoffzellenstapel 2, 3 mit ihren Zuleitungen und Ableitungen sowie den beiden Ladeluftkühlern 21, 22 sind dabei analog zur Darstellung in Figur 1 dargestellt und zu verstehen. Auf diesen Aufbau wird ebenso wie auf die gesamte auch hier nur exemplarisch und schematisch dargestellte Anodenseite des Brennstoffzellensystems nicht weiter eingegangen.

Die Luftversorgungsvorrichtung 27 dient nun zur Luftversorgung der beiden Brennstoffzellenstapel 2, 3 unabhängig voneinander und ist als zweistufige Luftversorgungsvorrichtung 27 ausgebildet. Die erste Stufe bildet für beide Brennstoffzellenstapel 2, 3 gemeinsam ein Strömungsverdichter 28 mit einer elektrischen Antriebsmaschine 29. Diese wird über eine gemeinsame Steuerung 30 entsprechend angesteuert, ebenso wie weitere später noch erwähnte Bauteile. Der Luftstrom des Strömungsverdichters 28 wird dann auf zwei parallele Ansaugleitungen 31, 32 aufgeteilt und versorgt zwei Turboverdichter mit Luft, welche auch hier wieder mit den Bezugszeichen 15, 16 analog zur Darstellung in Figur 1 bezeichnet sind. Diese beiden Turboverdichter 15, 16 bilden nun die zweite Verdichtungsstufe aus und liefern die von ihr verdichtete Luft als Sauerstofflieferant über die Ladeluftkühler 21, 22 durch die Zuluftleitungen 19, 20 in die Kathodenräume 9, 10 der beiden Brennstoffzellenstapel 2, 3.

Im Gegensatz zum Aufbau in Figur 1 gemäß dem Stand der Technik sind sie als sogenannte Freiläufer aufgebaut, welche auf einer gemeinsamen Welle mit ihrer jeweiligen Abluftturbine 17, 18 angeordnet sind. Ohne die elektrische Maschine der beiden elektrischen Turbolader 12, 13 gemäß dem Stand der Technik ist dieser Aufbau jedoch sehr viel einfacher und effizienter zu realisieren. Ergänzend zu dem bisher im Rahmen der Figur 1 beschriebenen Aufbau verfügen nun beide Abluftturbinen 17, 18 jeweils über ein variables Turbinenleitgitter 33, 34. Dabei ist eine Ansteuerung dieser Turbinenleitgitter 33, 34 unabhängig voneinander über die gemeinsame Steuerung 30 vorgesehen. Hierdurch ist es möglich, bei gemeinsamer erster Stufe der Verdichtung über den Strömungsverdichter 28 über die beiden Turboverdichter 15, 16 unabhängig voneinander die dem jeweiligen Brennstoffzellenstapel 2, 3 bzw. seinem Kathodenraum 9, 10 zugeführte Luftmenge entsprechend einzustellen. Vergleichbar wie bei dem Aufbau im Stand der Technik der Figur 1 sind trotz des einfacheren konstruktiven Aufbaus mit weniger Bauteilen beide Brennstoffzellenstapel 2, 3 bezüglich ihrer Luftversorgung unabhängig voneinander ansteuerbar. Zusammen mit der ohnehin recht einfach unabhängig umzusetzenden Ansteuerung der Dosierventile 5, 6 ist so ein weitgehend unabhängiger Betrieb der beiden Brennstoffzellenstapel 2, 3 voneinander möglich. Durch die Zweistufigkeit kann außerdem auf die Umblasventile 23, 24 verzichtet werden, welche natürlich prinzipiell dennoch vorgesehen sein könnten, wenn sie beispielsweise aus anderen Gründen als Systembypass benötigt werden würden oder dergleichen.

## Patentansprüche

1. Luftversorgungsvorrichtung (27) für Brennstoffzellensysteme mit einer zweistufigen Verdichtung,
**dadurch gekennzeichnet, dass**
zur Versorgung elektrisch parallel verschalteter Brennstoffzellenstapel (2, 3) für jeden der Brennstoffzellenstapel (2, 3) ein Turboverdichter (15, 16) vorgesehen ist, welcher mit einer Abluftturbine (17, 18) für den jeweiligen Brennstoffzellenstapel (2, 3) mechanisch gekoppelt ist, wobei in Strömungsrichtung der verdichteten Luft vor dem jeweiligen Turbokompressor (15, 16) mindestens ein elektrisch angetriebener Strömungsverdichter (28) vorgesehen ist, welcher jeweils wenigstens zwei der Turbokompressoren (15, 16) parallel mit Luft versorgt.

2. Luftversorgungsvorrichtung (27) nach Anspruch 1,
**dadurch gekennzeichnet, dass**
wenigstens eine der Abluftturbinen (17, 18) ein variables Turbinenleitgitter (33, 34) aufweist.

3. Luftversorgungsvorrichtung (27) nach Anspruch 1 oder 2,
**dadurch gekennzeichnet, dass**
jede der Abluftturbinen (17, 18) ein variables Turbinenleitgitter (33, 34) aufweist.

4. Luftversorgungsvorrichtung (27) nach Anspruch 1, 2 oder 3,
**dadurch gekennzeichnet, dass**
das wenigstens eine variable Turbinenleitgitter (33, 34) und ein Antriebsmotor (29) des Strömungsverdichters (27) über eine gemeinsame Steuerung (30) angesteuert sind.

5. Luftversorgungsvorrichtung (27) nach einem der Ansprüche 1 bis 4,
**dadurch gekennzeichnet, dass**
ein Strömungsverdichter (28) und genau zwei Turboverdichter (15, 16) vorgesehen sind.

6. Luftversorgungsvorrichtung (27) nach einem er Ansprüche 1 bis 5,
**dadurch gekennzeichnet, dass**
in Strömungsrichtung nach dem jeweiligen Turboverdichter (15, 16) jeweils ein Ladeluftkühler (21, 22) angeordnet ist.

7. Brennstoffzellensystem mit wenigstens zwei Brennstoffzellenstapeln (2, 3) und einer Luftversorgungsvorrichtung (28) nach einem der Ansprüche 1 bis 6.

8. Fahrzeug (1) mit einem Brennstoffzellensystem nach Anspruch 7.

9. Fahrzeug (1) nach Anspruch 8
**gekennzeichnet durch**
seine Ausbildung als Nutzfahrzeug.

## Claims

1. An air supply device (27) for fuel cell systems with a two-stage compression, **characterized in that**
for supply of fuel cell stacks (2, 3) electrically connected in parallel, a turbo compressor (15, 16) is provided for each of the fuel cell stacks (2, 3), which is mechanically coupled to an exhaust gas turbine (17, 18) for the respective fuel cell stack (2, 3),
wherein, in flow direction of the compressed air upstream of each turbo compressor (15, 16), at least one electrically driven flow compressor (28) is provided, which supplies air to at least two of the turbo compressors (15, 16) in parallel.

2. The air supply device (27) according to claim 1,
**characterized in that**
at least one of the exhaust gas turbines (17, 18) comprises a variable turbine nozzle (33, 34).

3. The air supply device (27) according to claim 1 or 2,
**characterized in that**
each of the exhaust gas turbines (17, 18) comprises a variable turbine nozzle (33, 34).

4. The air supply device (27) according to claim 1, 2 or 3,
**characterized in that**
the at least one variable turbine nozzle (33, 34) and a drive motor (29) of the flow compressor (27) are controlled via a common control unit (30).

5. The air supply device (27) according to any one of claims 1 to 4,
**characterized in that**
one flow compressor (28) and exactly two turbo compressors (15, 16) are provided.

6. The air supply device (27) according to any one of claims 1 to 5,
**characterized in that**
in flow direction downstream of the respective turbo compressor (15, 16), an intercooler (21, 22) is arranged in each case.

7. A fuel cell system with at least two fuel cell stacks (2, 3) and an air supply device (28) according to any one of claims 1 to 6.

8. A vehicle (1) with a fuel cell system according to claim 7.

9. The vehicle (1) according to claim 8,
**characterized by**
its configuration as a commercial vehicle.

## Revendications

1. Dispositif d'alimentation en air (27) pour les systèmes de piles à combustible avec une compression à deux étages, **caractérisé en ce que**
un turbocompresseur (15, 16) est prévu pour l'alimentation d'empilements de piles à combustible (2, 3) branchés en parallèle électriquement pour chacune des piles à combustible (2, 3), lequel est couplé mécaniquement à une turbine d'évacuation d'air (17, 18) pour l'empilement de piles à combustible (2, 3) respectif, dans lequel au moins un compresseur d'écoulement (28) à entraînement électrique, qui alimente en air en parallèle respectivement au moins deux des turbocompresseurs (15, 16), est prévu devant le turbocompresseur (15, 16) respectif dans la direction d'écoulement de l'air comprimé.

2. Dispositif d'alimentation en air (27) selon la revendication 1,
**caractérisé en ce que**
au moins une des turbines d'évacuation d'air (17, 18) présente une grille de guidage de turbine variable (33, 34).

3. Dispositif d'alimentation en air (27) selon la revendication 1 ou 2,
**caractérisé en ce que**
chacune des turbines d'évacuation d'air (17, 18) présente une grille de guidage de turbine variable (33, 34).

4. Dispositif d'alimentation en air (27) selon la revendication 1, 2 ou 3,
**caractérisé en ce que**
l'au moins une grille de guidage de turbine variable (33, 34) et un moteur d'entraînement (29) du compresseur d'écoulement (27) sont pilotés par une commande commune (30).

5. Dispositif d'alimentation en air (27) selon l'une quelconque des revendications 1 à 4,
**caractérisé en ce que**
un compresseur d'écoulement (28) et précisément deux turbocompresseurs (15, 16) sont prévus.

6. Dispositif d'alimentation en air (27) selon l'une quelconque des revendications 1 à 5,
**caractérisé en ce que**
un refroidisseur d'air de suralimentation (21, 22) est disposé respectivement dans une direction d'écoulement après le turbocompresseur (15, 16) respectif.

7. Système de piles à combustible avec au moins deux empilements de piles à combustible (2, 3) et un dispositif d'alimentation en air (28) selon l'une quelconque des revendications 1 à 6.

8. Véhicule (1) avec un système de piles à combustible selon la revendication 7.

9. Véhicule (1) selon la revendication 8
**caractérisé par**
sa réalisation en tant que véhicule utilitaire.
